(19) Europäisches Patentamt
European Patent Office
Office européen des brevets

(11) **EP 3 527 971 A1**

(12) **EUROPEAN PATENT APPLICATION**
published in accordance with Art. 153(4) EPC

(43) Date of publication:
**21.08.2019 Bulletin 2019/34**

(21) Application number: **18826174.7**

(22) Date of filing: **21.12.2018**

(51) Int Cl.:
**G01N 21/65** $^{(2006.01)}$

(86) International application number:
**PCT/CN2018/122839**

(87) International publication number:
**WO 2019/128878 (04.07.2019 Gazette 2019/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.12.2017 CN 201711442583**

(71) Applicant: **Nuctech Company Limited
TongFang Building,
Shuangqinglu,
Haidian District
Beijing 100084 (CN)**

(72) Inventor: **The designation of the inventor has not yet been filed**

(74) Representative: **Yip, Matthew Wing Yu
Maucher Jenkins
26 Caxton Street
London SW1H 0RJ (GB)**

(54) **TEST OBJECT SAFETY INSPECTION METHOD AND TEST OBJECT SAFETY INSPECTION DEVICE**

(57)    Embodiments of the present invention provide a method and an apparatus for inspecting security of an object to be detected. The method includes: guiding an exciting light to the object, collecting a first optical signal from the object and generating a first spectrum from the first optical signal; guiding the exciting light to the object again after a predetermined time interval, collecting a second optical signal from the object and generating a second spectrum from the second optical signal; and comparing the first spectrum with the second spectrum to determine whether or not the object is damaged.

$\underline{S100}$

FIG. 1

**Description**

CROSS-REFERENCE TO RELATED APPLICATION

This application claims priority of Chinese Patent Application No. 201711442583.3 filed on December 26, 2017 in the State Intellectual Property Office of China, the disclosure of which is incorporated herein by reference.

BACKGROUND OF THE DISCLOSURE

**Field of the Disclosure**

Embodiments of the present disclosure relate to the field of spectrum detection, and in particular to a method for inspecting security of an object to be detected and an apparatus for inspecting security of an object to be detected.

**Description of the Related Art**

Spectrum analysis technologies, such as Raman spectrum analysis technology, fluorescence spectrum analysis technology, etc., are widely used for substance detection and analysis. Raman spectrum analysis technology is one of non-contact spectrum analysis technologies based on Raman scattering effects. It can analyze compositions of substance qualitatively and quantitatively. Raman spectrum is one of molecular vibration spectra. It may represent fingerprint features of molecules for inspection of substance and can be used for inspection of substance. The Raman spectrum inspection can inspect and recognize substances by detecting Raman spectra produced by the Raman scattering effects of an object to be inspected to an exciting light. The Raman spectrum inspection method has been broadly used in various fields, such as liquid security inspection, gem inspection, explosive inspection, drug inspection, medicine inspection.

In recent years, Raman spectrum analysis technology has been widely applied in fields such as inspection of hazardous articles and recognition of substance. In the field of recognition of substances, the people often cannot judge properties of the substances correctly as various substances have different colors and shapes. The Raman spectrum depends on energy level structure of molecules of the object to be detected, thus, the Raman spectrum may be used as "fingerprint" information of substances for recognizing substances. Therefore, the Raman spectrum analysis technology has been applied broadly in fields such as customs, common security, foods, drugs, environments.

In actual spectrum analysis, it is often necessary to use exciting light with a certain energy, and since compositions of the object to be detected are often unknown, there is a certain risk of damage (such as ignition and ablation) of the object to be detected. This risk is currently only guarded by user's pre-observation.

SUMMARY OF THE DISCLOSURE

The present application is directed to a method and an apparatus for inspecting security of an object to be detected for spectrum analysis, which is capable of effectively avoiding the risk of inspection due to damage of the object by exciting light in spectral signal collection.

An embodiment of the present invention provides a method for inspecting security of an object to be detected, including: guiding an exciting light to the object, collecting a first optical signal from the object and generating a first spectrum from the first optical signal; guiding the exciting light to the object again after a predetermined time interval, collecting a second optical signal from the object and generating a second spectrum from the second optical signal; and comparing the first spectrum with the second spectrum to determine whether or not the object is damaged.

In an embodiment, the comparing the first spectrum with the second spectrum to determine whether or not the object is damaged includes: comparing an overall integrated intensity of the first spectrum with an overall integrated intensity of the second spectrum to obtain a difference between the overall integrated intensity of the first spectrum and the overall integrated intensity of the second spectrum; determining that the object is damaged in response to a condition where the difference between the overall integrated intensity of the first spectrum and the overall integrated intensity of the second spectrum exceeds a first threshold, and determining that the object is not damaged in response to a condition where the difference between the overall integrated intensity of the first spectrum and the overall integrated intensity of the second spectrum does not exceed the first threshold.

In an embodiment, the comparing the first spectrum with the second spectrum to determine whether or not the object is damaged includes: extracting a fluorescent envelope of the first spectrum and a fluorescent envelope of the second spectrum, respectively; and comparing the fluorescent envelope of the first spectrum with the fluorescent envelope of the second spectrum to determine whether or not the object is damaged.

In an embodiment, the comparing the fluorescent envelope of the first spectrum with the fluorescent envelope of the second spectrum to determine whether or not the object is damaged includes: detecting a position and an intensity of one or more peak in the fluorescent envelope of the first spectrum to obtain one or more first reference fluorescent intensity; detecting an intensity at a position in the fluorescent envelope of the second spectrum corresponding to the position of the one or more peak to obtain one or more second reference fluorescent intensity; determining that the object is damaged in response to a condition where a difference between the first reference fluorescent intensity and the second reference fluorescent intensity exceeds a second threshold, and determining that the object is not damaged in response to a condition where the difference between the first reference fluorescent intensity and the second reference fluorescent intensity does not exceed the second threshold.

In an embodiment, the comparing the first spectrum with the second spectrum to determine whether or not the object is damaged includes: extracting a Raman spectral characteristic peak in the first spectrum and a Raman spectral characteristic peak in the second spectrum, respectively; comparing a position of the Raman spectral characteristic peak in the first spectrum with a position of the Raman spectral characteristic peak in the second spectrum, and determining that the object is damaged in response to a condition where a difference between the position of the Raman spectral characteristic peak in the first spectrum and the position of the Raman spectral characteristic peak in the second spectrum exceeds a third threshold.

In an embodiment, the comparing the first spectrum with the second spectrum to determine whether or not the object is damaged includes: extracting a Raman spectral characteristic peak in the first spectrum and a Raman spectral characteristic peak in the second spectrum, respectively; comparing an intensity of the Raman spectral characteristic peak in the first spectrum with an intensity of the Raman spectral characteristic peak in the second spectrum, and determining that the object is damaged in response to a condition where a difference between the intensity of the Raman spectral characteristic peak in the first spectrum and the intensity of the Raman spectral characteristic peak in the second spectrum exceeds a fourth threshold.

In an embodiment, the comparing the first spectrum with the second spectrum to determine whether or not the object is damaged includes: calculating a similarity between the first spectrum and the second spectrum, and determining that the object is damaged in response to a condition where the similarity between the first spectrum and the second spectrum is less than a fifth threshold, and determining that the object is not damaged in response to a condition where the similarity between the first spectrum and the second spectrum is not less than the fifth threshold.

In an embodiment, the comparing the first spectrum with the second spectrum to determine whether or not the object is damaged includes: comparing an overall integrated intensity of the first spectrum with an overall integrated intensity of the second spectrum to obtain a difference between the overall integrated intensity of the first spectrum and the overall integrated intensity of the second spectrum; determining that the object is damaged in response to a condition where the difference between the overall integrated intensity of the first spectrum and the overall integrated intensity of the second spectrum exceeds a first threshold, and performing the following steps in response to a condition where the difference in overall integrated intensity does not exceed the first threshold: extracting a fluorescent envelope of the first spectrum and a fluorescent envelope of the second spectrum, respectively; detecting a position and an intensity of one or more peak in the fluorescent envelope of the first spectrum to obtain one or more first reference fluorescent intensity; detecting an intensity at a position in the fluorescent envelope of the second spectrum corresponding to the position of the one or more peak to obtain one or more second reference fluorescent intensity; determining that the object is damaged in response to a condition where a difference between the first reference fluorescent intensity and the second reference fluorescent intensity exceeds a second threshold, and performing the following steps in response to a condition where the difference between the first reference fluorescent intensity and the second reference fluorescent intensity does not exceed the second threshold: extracting a Raman spectral characteristic peak in the first spectrum and a Raman spectral characteristic peak in the second spectrum, respectively; comparing a position of the Raman spectral characteristic peak in the first spectrum with a position of the Raman spectral characteristic peak in the second spectrum, and determining that the object is damaged in response to a condition where a difference between the position of the Raman spectral characteristic peak in the first spectrum and the position of the Raman spectral characteristic peak in the second spectrum is greater than a third threshold.

In an embodiment, the comparing the first spectrum with the second spectrum to determine whether or not the object is damaged includes: comparing an overall integrated intensity of the first spectrum with an overall integrated intensity of the second spectrum to obtain a difference between the overall integrated intensity of the first spectrum and the overall integrated intensity of the second spectrum; determining that the object is damaged in response to a condition where the difference between the overall integrated intensity of the first spectrum and the overall integrated intensity of the second spectrum exceeds a first threshold, and performing the following steps in response to a condition where the difference between the overall integrated intensity of the first spectrum and the overall integrated intensity of the second spectrum does not exceed the first threshold: extracting a fluorescent envelope of the first spectrum and a fluorescent envelope of the second spectrum, respectively; detecting a position and an intensity of one or more peak in the fluorescent envelope of the first spectrum to obtain one or more first reference fluorescent intensity; detecting an intensity at a position in the fluorescent envelope of the second spectrum corresponding to the position of the one or more peak to obtain one or more second reference fluorescent intensity; determining that the object is damaged in response to a condition where a difference between the first reference fluorescent intensity and the second reference fluorescent intensity exceeds a second threshold, and performing the following steps in response to a condition where the difference between the first reference fluorescent intensity and the second reference fluorescent intensity does not exceed the second threshold: extracting a Raman spectral characteristic peak in the first spectrum and a Raman spectral characteristic peak in the second spectrum, respectively; comparing an intensity of the Raman spectral characteristic peak in the first spectrum with an intensity of the Raman spectral characteristic peak in the second spectrum, and determining that the object is damaged in response to a condition where a difference between the intensity of the Raman spectral characteristic peak in the first spectrum and the intensity of the Raman spectral characteristic peak in the second spectrum is greater than a fourth threshold.

In an embodiment, the comparing the first spectrum with the second spectrum to determine whether or not the object is damaged includes: comparing an overall integrated intensity of the first spectrum with an overall integrated intensity of the second spectrum to obtain a difference between the overall integrated intensity of the first spectrum and the overall integrated intensity of the second spectrum; determining that the object is damaged in response to a condition where the difference between the overall integrated intensity of the first spectrum and the overall integrated intensity of the second spectrum exceeds a first threshold, and performing the following steps in response to a condition where the difference between the overall integrated intensity of the first spectrum and the overall integrated intensity of the second spectrum does not exceed the first threshold: extracting a fluorescent envelope of the first spectrum and a fluorescent envelope of the second spectrum, respectively; detecting a position and an intensity of one or more peak in the fluorescent envelope of the first spectrum to obtain one or more first reference fluorescent intensity; detecting an intensity at a position in the fluorescent envelope of the second spectrum corresponding to the position of the one or more peak to obtain one or more second reference fluorescent intensity; determining that the object is damaged in response to a condition where a difference between the first reference fluorescent intensity and the second reference fluorescent intensity exceeds a second threshold, and performing the following steps in response to a condition where the difference between the first reference fluorescent intensity and the second reference fluorescent intensity does not exceed the second threshold: calculating a similarity between the first spectrum and the second spectrum, and determining that the object is damaged in response to a condition where the similarity between the first spectrum and the second spectrum is less than a fifth threshold, and determining that the object is not damaged in response to a condition where the similarity between the first spectrum and the second spectrum is not less than the fifth threshold.

In an embodiment, the exciting light is achieved by at least one set of laser pulses, and the exciting light has an energy ranging between 0.1 millijoule and 0.5 millijoule.

In an embodiment, the predetermined time interval is greater than or equal to 500 milliseconds.

In an embodiment, the exciting light configured to generate the first optical signal and the exciting light configured to generate the second optical signal are equal in power.

An embodiment of the present invention also provides an apparatus for inspecting security of an object to be detected, including: a laser device configured to emit an exciting light; an optical device configured to guide the exciting light to the object and collect an optical signal from the object; a spectrometer configured to split the optical signal from the optical device to generate a spectrum of the object; and an object state determining device configured to receive the spectrum from the spectrometer and compare the spectra which are respectively generated from the optical signals collected from the same object at least twice so as to determine whether or not the object is damaged.

In an embodiment, the object state determining device includes a first module configured to compare overall intensities of the spectra which are respectively generated from the optical signals collected from the same object at least twice.

In an embodiment, the object state determining device includes a second module configured to compare fluorescent envelopes of the spectra which are respectively generated from the optical signals collected from the same object at least twice.

In an embodiment, the object state determining device includes a third module configured to compare Raman spectral characteristics of the spectra which are respectively generated from the optical signals collected from the same object at least twice.

In an embodiment, the object state determining device includes a fourth module configured to calculate a similarity of spectrum signals which are respectively collected from the same object at least twice.

In an embodiment, the apparatus further includes: an exciting light modulation module configured to modulate the exciting light into at least two sets of laser pulses having a time interval greater than or equal to 500 milliseconds.

By means of the method and apparatus for inspecting security of the object to be detected according to the above embodiments, it can reduce or prevent the risk due to a sharp reaction of the object with the exciting light.

BRIEF DESCRIPTION OF THE DRAWINGS

FIG. 1 is a flow chart showing a method for inspecting security of an object to be detected according to an embodiment of the present invention;

FIG. 2 is a flow chart showing an exemplary spectra comparison step in a method for inspecting security of an object to be detected according to an embodiment of the present invention;

FIG. 3 is a flow chart showing another exemplary spectra comparison step in a method for inspecting security of an object to be detected according to an embodiment of the present invention;

FIG. 4 is a flow chart showing an exemplary spectrum fluorescent envelope comparison step in a method for inspecting security of an object to be detected according to an embodiment of the present invention;

FIG. 5 is a flow chart showing a further exemplary spectra comparison step in a method for inspecting security of an object to be detected according to an embodiment of the present invention;

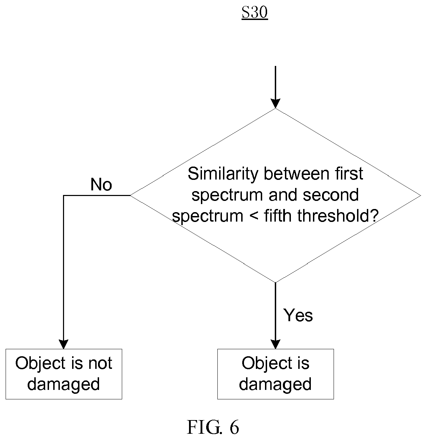

FIG. 6 is a flow chart showing another further exemplary spectra comparison step in a method for inspecting security of an object to be detected according to an embodiment of the present invention;

FIG. 7 is a flow chart showing still another further exemplary spectra comparison step in a method for inspecting security of an object to be detected according to an embodiment of the present invention;

FIG. 8 is a flow chart showing still another further exemplary spectra comparison step in a method for inspecting security of an object to be detected according to an embodiment of the present invention;

FIG. 9a and FIG. 9b show comparatively spectrograms collected from the same object twice by using an apparatus for inspecting security of an object to be detected according to an embodiment of the present invention;

FIG. 10a and FIG. 10b show comparatively spectrograms collected from another object twice by using an apparatus for inspecting security of an object to be detected according to an embodiment of the present invention;

FIG. 11a and FIG. 11b show comparatively spectrograms collected from a further object twice by using an apparatus for inspecting security of an object to be detected according to an embodiment of the present invention; and

FIG. 12 is a schematic view of an apparatus for inspecting security of an object to be detected according to an embodiment of the present invention.

All of circuits or structures of the apparatus for inspecting security of the object to be detected according to embodiments of the present invention are not shown in Figures. Same reference numerals represent same or similar components or features throughout all of Figures.

DETAILED DESCRIPTION OF THE EMBODIMENTS

Technical solutions of the present disclosure will be described hereinafter in more detail by the way of embodiments with reference to the attached drawings. The same or similar reference numerals refer to the same or similar elements throughout the description. The explanation to the embodiments of the present disclosure with reference to the attached drawings is intended to interpret the general concept of the present disclosure, rather than being construed as a limiting to the present disclosure.

In addition, in the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

As mentioned above, the use of exciting light to acquire optical signals is a fundamental step in the spectrum analysis of the object to be detected. As the exciting light itself has a certain energy, it may react with object which are formed of certain materials, thereby leading to changes in composition of the object. For example, some flammable and explosive materials may be ignited, ablated or exploded under the action of exciting light. In practice, as the compositions of the object to be detected are often unknown, it is necessary to inspect security of the object prior to formal light signal acquisition and measurement, so as to determine whether or not the object to be detected is suitable for laser detection/Raman spectrum detection. The term "security" as used herein has two meanings. In one meaning, the object to be detected may cause danger to spectrum inspection instruments and operators as it is ignited, ablated or exploded. In the other meaning, the changes in composition due to the reaction between the exciting light and the object to be detected may result in unpredictable deviations in detection result and then result in failure of object inspection.

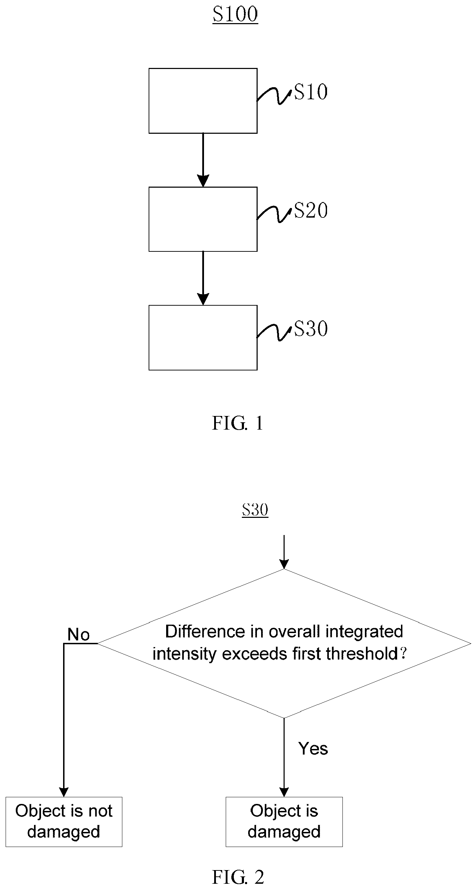

In order to inspect the security of the object to be detected, an embodiment of the present invention provides a method 100 for inspecting security of an object to be detected. In an embodiment, as shown in FIG. 1, the method may include:

step S10: guiding exciting light to the object to be detected, collecting a first optical signal from the object and generating a first spectrum from the first optical signal;

step S20: guiding exciting light to the object again after a predetermined time interval, collecting a second optical signal from the object and generating a second spectrum from the second optical signal; and

step S30: comparing the first spectrum with the second spectrum to determine whether or not the object is damaged.

By means of the above method, two spectra of the same object may be obtained by two measurements separated by the predetermined time interval. The two measurements aim to determine whether or not the object is suitable for laser detection/Raman spectrum inspection, so the duration of pulses emitted by the exciting light in these two measurements are shorter than the duration of pulses emitted by the exciting light in the normal Raman spectrum inspection/laser detection, and the energy of pulses emitted by the exciting light in these two measurements are less than the energy of pulses emitted by the exciting light in the normal Raman spectrum inspection/laser detection, thereby avoiding accidents such as explosions. By comparing the two spectra obtained from the two measurements, it can be determined whether or not there is change in the composition of the object after it is irradiated with the exciting light. It will be understood by those skilled in the art that there are usually certain changes in the composition whether the object is ignited, ablated, exploded, or otherwise reacted with the exciting light. In particular, when the energy of the exciting light is small and the reaction is not severe, the composition has often been changed. The spectra corresponding to different compositions are also different. Therefore, by comparing the above two spectra, it can be known whether or not the composition of the object has been changed, that is, whether or not the object has been damaged. If the object is not damaged, it is proved that the object can be normally analyzed and inspected on a basis of spectrum. If the object has been changed or damaged, the object needs to be re-evaluated instead of continuing the normal spectrum analysis and inspection. For example, other inspection methods without using exciting light may be selected to inspect the object.

As an example, in the above steps S10 and S20, the irradiation time of each exciting light may be relatively short, for example, within a range of from 0.5 milliseconds to 5 milliseconds, so as to prevent the exciting light having excessively large energy which may otherwise react with certain objects to be detected to cause a danger. The predetermined time interval may be relatively long, for example, greater than or equal to 500 milliseconds, so as to avoid any accumulation effect (primarily referring to the accumulation of generated heat) of two irradiation of the exciting light. For security reasons, the irradiation energy of each exciting light typically in the above steps S10 and S20 is less than or much less than the energy of the exciting light in the normal spectrum inspection. As an example, in practice, the above two signal collections may be initiated by generating two or two sets of laser pulses having the above predetermined time interval as the exciting light. In this way, it is not necessary to move or replace the object or re-adjust the inspection apparatus, thus the operation is relatively easy.

Specific examples of the energy of the exciting light are given below:
It is assumed that the specific heat capacity of the object to be detected is 1 KJ/kg□, the density thereof is 2 g/cm$^3$, the irradiation spot diameter of the exciting light is 100$\mu$m, the irradiation depth of the exciting light is 100$\mu$m, and the temperature rise due to the exciting light irradiation is 100°C. According to the formula "absorbed heat = specific heat capacity of the object $\times$ temperature rise $\times$ mass of a portion of the object irradiated by the exciting light", it can be calculated that the total heat absorbed by the object is about 0.16mJ. According to the absorption rate of 80%, the irradiation energy required for each exciting light is 0.2mJ. If the exciting light is achieved by a laser pulse from a 200mW laser, each pulse width is about 1 millisecond. For some flammable substances, such as charcoal, the specific heat capacity is 0.8 KJ/kg°C, the density is 0.4 g/cm$^3$, and the ignition point is about 300 °C. According to the calculation similar to the above, it can be known that for 200mW laser pulse, charcoal may be partially ignited within 0.5 milliseconds, thereby causing a change in composition. It will be understood by those skilled in the art that embodiments of the present invention are not limited thereto, and methods and apparatus according to embodiments of the present invention may also inspect other substances. For example, for each irradiation, the energy of the exciting light may range from 0.1 millijoule to 0.5 millijoule.

It can be known from the above examples that for a flammable or explosive dangerous product, a short-time laser pulse may cause the change in composition, and by means of two optical signal collections separated by the predetermined time interval, in particular, by means of collecting two optical signals before and after the irradiation of the exciting light and comparing two spectra from the two optical signals, it can be determined whether or not there has been a change in composition of the object, that is, whether or not the object has been damaged.

The following examples are given for explaining specific manner for comparing the first spectrum with the second spectrum.

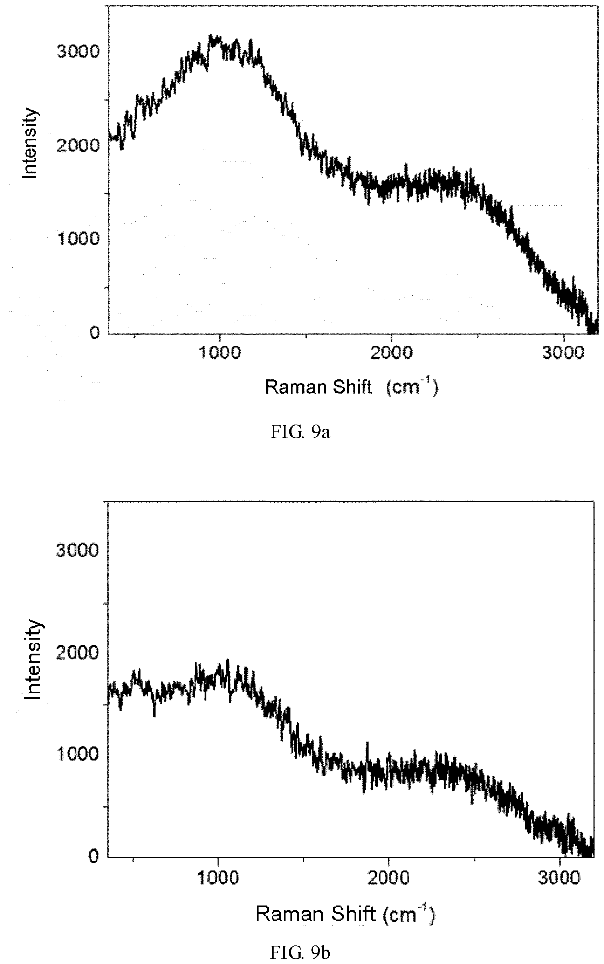

In an example, as shown in FIG. 2, the step S30 may include: comparing an overall integrated intensity of the first spectrum with an overall integrated intensity of the second spectrum to obtain a difference in overall integrated intensity; determining that the object has been damaged if the difference between the overall integrated intensity of the first spectrum and the overall integrated intensity of the second spectrum exceeds a first threshold; otherwise, determining that the object has not been damaged. FIGS. 9a and 9b show a first spectrum (as shown in FIG. 9a) and a second spectrum (as shown in FIG. 9b) generated in two measurements of dark samples according to the method for inspecting security of an object to be detected providing by an embodiment of the present invention. Through the calculation, the total integrated intensity of the first spectrum is 2148528 (normalized unit), and the total integrated intensity of the second spectrum is 1204736 (normalized unit). The difference between the two total integrated intensities is 943792, and it may be expressed by a ratio of the difference to the total integrated intensity of the first spectrum, which is calculated according to 943792/2148528=44%. Such a large difference indicates that the composition of the dark sample has been changed. Through actual observation, it can be found that the dark sample has been partially ablated. In this example, it should strive to make powers of the exciting light pulses in the two measurements be equal (it is also preferable to make durations, energy of the exciting light pulses in the two measurements be equal). Since an intensity and signal-to-noise ratio of a signal detected by a Raman spectrometer are related to the power of the exciting light, the wavelength of the exciting light, and the light absorption coefficient of the object (of course, they are also related to detection distance and stability of the detection element, but the detection distance and the stability of the detection element are relatively stable, which are not considered here), so that the spectral intensity comparison is meaningful by making the powers of the exciting light in the two measurements be equal. Obviously, if the powers of the exciting light in the two measurements are different, it is necessary to correct one of the two detected spectra according to power curves of the fluorescence, Raman light and the exciting light as well as the powers of the exciting light in the two measurements, so as to remove an influence from different powers of the exciting light, and then the corrected two spectra are compared. Such a method falls also within the scope of this application.

As an example, the first threshold may be set according to actual conditions. First, an absolute value of the intensity of the spectrum may vary due to different objects to be detected and different corrections for optical devices in actual operation, thus the first threshold may take the form of a ratio (percent), that is, the difference between the overall integrated intensity of the first spectrum and the overall integrated intensity of the second spectrum is generally expressed in the form of "(the overall integrated intensity of the second spectrum being subtracted from the overall integrated intensity of the first spectrum) divided by the overall integrated intensity of the first spectrum". For example, in this case, the first threshold may be $\pm20\%$. Secondly, even if the first threshold is in the form of a percentage, the percentage may fluctuate due to factors such as instability of the laser power. For a system with high stability such as high stability of laser power, a relatively small first threshold will be adopted. For example, the first threshold can be set to $\pm5\%$. For a system with poor stability, the first threshold can be set to $\pm25\%$. In the example shown in FIGS. 9a and 9b, the difference between the overall integrated intensity of the first spectrum and the overall integrated intensity of the second spectrum far exceeds the first threshold described above. However, embodiments of the present invention are not limited thereto, and the first threshold may be determined according to actual needs. The comparison of the spectra is achieved by using the difference between the overall integrated intensity of the first spectrum and the overall integrated intensity of the second spectrum. The calculation is relatively simple, and it is particularly effective in the case where the first spectrum and the second spectrum are significantly different.

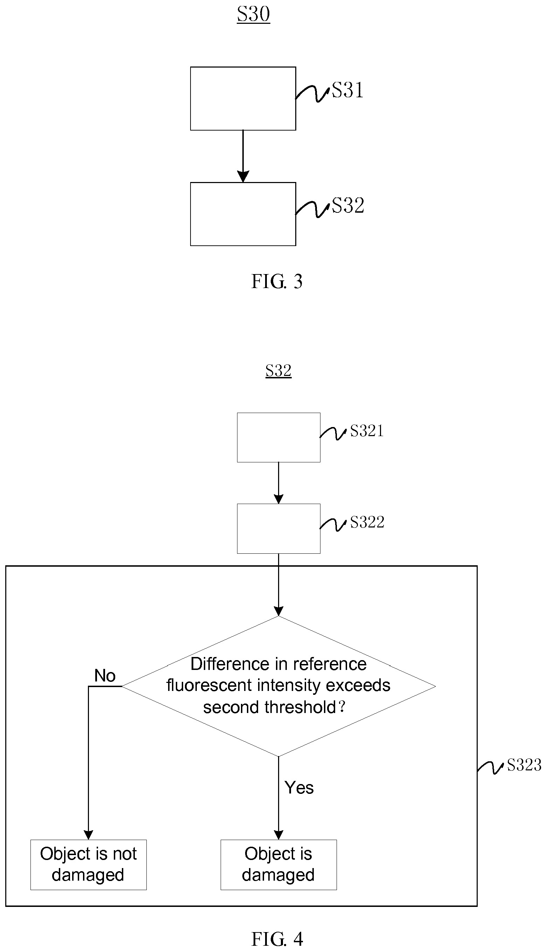

In another example, as shown in FIG. 3, the step S30 may include: step S31: extracting a fluorescent envelope of the first spectrum and a fluorescent envelope of the second spectrum, respectively; and step S32: comparing the fluorescent envelope of the first spectrum with the fluorescent envelope of the second spectrum to determine whether or not the object is damaged. The following method may be used to extract the fluorescent envelope of the first spectrum.

First of all, the first spectrum signal is discretized into a discrete numerical form. If the superposition signal is a continuous analog curve, then it needs to be converted into the discrete numerical form by a sampling process. However, in practice, the first spectrum signal is often in the discrete numerical form. In this case, it only needs to acquire numerical sample points directly.

The florescent signal changes more slowly and smoothly in comparison with such as the Raman characterizing signal. As an example, the fluorescent envelope may be calculated by iteration as follow:

assuming that $\{y_n\}$ is a sequence of numerical sample points of the first spectrum signal, $y_n(i)$ is a value of the $i_{th}$ numerical sample point, and $\{y_{n+1}\}$ is the sequence which is calculated out after one iteration and $y_{n+1}(i)$ is a value of the $i_{th}$ numerical sample point in $\{y_{n+1}\}$, then

$$y_{n+1}(i) = \min\left[ y_n(i), \frac{y_n(i-m)+y_n(i+m)}{2} \right] \qquad \text{equation (1)}$$

where m is a positive integer and has an initial value of 1, and the above iteration is performed repeatedly until m meets a predetermined threshold, where m is added by 1 per iteration. By the above iterative calculation, the florescent envelope can be obtained.

In the above equation (1), "min[..., ...]" represents an operation of selecting minimum. Obviously, the serial number of the numerical point in each iterative calculation should meet the condition that i-m >0 and i+m is not greater than the total length of the sequence $\{y_n\}$. If a numerical point does not meet the condition, it may maintain its original value constantly in the iterative calculation.

In an example, the predetermined threshold of m is determined depending on the smoothness of the first spectrum signal. For example, when two points spaced by a distance of $2 \times m$ in a sequence of iterative result have a width of wave number which is greater than a minimum peak width but smaller than a fluorescent envelope width, it may be determined that m meets the predetermined threshold.

In an example, in order to further improve the calculation accuracy, the first spectrum signal may be subject to a logarithm treatment or a square treatment before the above iterative calculation is performed.

Although in the above example, the calculation of the fluorescence interference signal is explained with reference to the iterative method as shown in equation (1), it should be understood that it is not necessary. The methods for solving a smooth spectrum signal in the art may also be used to solve the above florescent envelope, but the method may be more complex and cause a low calculation efficiency.

The extraction method of a fluorescent envelope of the second spectrum is similar to the extraction method of the fluorescent envelope of the first spectrum described above, and thus its details will be omitted herein.

As an example, the above step S32 may include:

step S321: detecting a position and an intensity of one or more peak in the fluorescent envelope of the first spectrum to obtain the intensity of the one or more fluorescent envelope peak of the first spectrum (may be referred to as one or more first reference fluorescent intensity);

step S322: detecting an intensity at a position of the fluorescent envelope of the second spectrum corresponding to the position (indicated by wave number of the fluorescent envelope peak of the first spectrum) of the one or more peak to obtain one or more second reference fluorescent intensity (it is noted that the fluorescent intensity at the position of the fluorescent envelope of the second spectrum corresponding to the wave number of the one or more peak of the fluorescent envelope of the first spectrum is not necessarily in a peak value);

step S323: determining the object is damaged if a difference between the first reference fluorescent intensity and the second reference fluorescent intensity exceeds a second threshold; otherwise, determining the object is not damaged.

In the above example, it is preferable to make the pulse powers of the exciting light in the two measurements be equal. Obviously, if the powers of the exciting light in the two measurements are different, it is necessary to correct one of the two detected spectra. The method is similar to the method as mentioned above, and thus its details will be omitted herein.

With regard to the example shown in FIGS. 9a and 9b, there are two peaks (the fluorescent envelope peaks) in the fluorescent envelope of the first spectrum (FIG. 9a), and the two peaks of the fluorescent envelope correspond to abscissa values 1010 and 2310, respectively, and they may be referred to as a first fluorescent envelope peak and a second fluorescent envelope peak, respectively. The intensity of the first fluorescent envelope peak is 3175 and the intensity of the second fluorescent envelope peak is 1750. Accordingly, the intensities (second reference fluorescent intensity) of the fluorescent envelope at the positions corresponding to the abscissa values 1010 and 2310, respectively, in the second spectrum (FIG. 9b) are 1690 and 960, respectively. According to the calculation, differences between corresponding fluorescent intensities in the first spectrum and the second spectrum are respectively 1485 and 790, and ratio of the differences to the corresponding fluorescent intensities in the first spectrum are 47% and 55%, respectively. Such a large difference indicates that the composition of the dark sample has been changed. Through actual observation, it can be found that the dark sample has been partially ablated.

As an example, the second threshold may be set according to actual needs. Similar to the difference between the overall integrated intensity of the first spectrum and the overall integrated intensity of the second spectrum, the difference between the first reference fluorescent intensity and the second reference fluorescent intensity is usually expressed in the form of "(the second reference fluorescent intensity being subtracted from the first reference fluorescent intensity) is divided by the first reference fluorescent intensity". For example, in this case, the second threshold may be ±20%, ±10% or other suitable value. For systems with high stability such as stable laser power, the second threshold may be relatively small. For systems with poor stability, the second threshold may be relatively large. In the example shown in FIGS. 9a and 9b, the difference between each of the first reference fluorescent intensities and the corresponding second reference fluorescent intensity far exceeds the second threshold described above. However, embodiments of the present invention are not limited thereto, and the second threshold may be determined according to actual needs.

For the case where the fluorescent envelope of the first spectrum has multiple peaks, the difference between each of the first reference fluorescent intensities and the corresponding second reference fluorescent intensity may be separately calculated and then compared with the second threshold, respectively. It will be determined that the object is damaged if any one of the differences exceeds the second threshold. Alternatively, the difference between each of the first reference fluorescent intensities and the corresponding second reference fluorescent intensity may be firstly calculated, a single metric value (for example, a root mean square average value, a geometric mean value, etc.) is then calculated from the difference and compared to the second threshold. It will be determined that the object is damaged if the single metric value exceeds the second threshold.

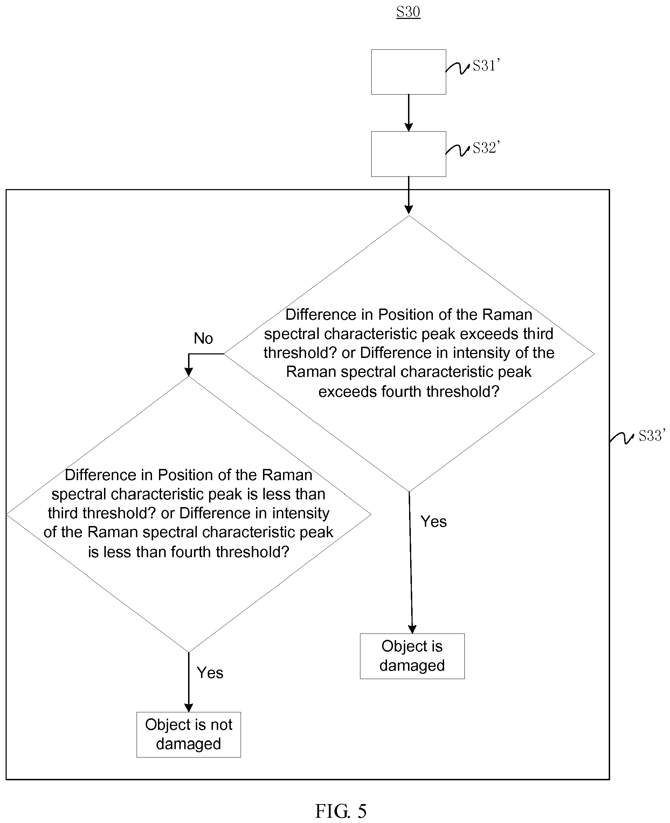

In an example, the first spectrum and the second spectrum may both be spectra acquired by a Raman spectrometer, and it may be determined whether or not the composition of the object is changed by mainly comparing Raman spectral characteristic peaks in the first spectrum with those in the second spectrum. Specifically, as an example, as shown in FIG. 5, the foregoing step S30 may include:

step S31': extracting a Raman spectral characteristic peak in the first spectrum and a Raman spectral characteristic peak in the second spectrum, respectively;

step S32': comparing position (wave number) and intensity of the Raman spectral characteristic peak in the first spectrum with position and intensity of the Raman spectral characteristic peak in the second spectrum, respectively; and determining that the object is damaged if a difference between the position of the Raman spectral characteristic peak in the first spectrum and the position of the Raman spectral characteristic peak in the second spectrum is greater than a third threshold or if a difference between the intensity of the Raman spectral characteristic peak in the first spectrum and the intensity of the Raman spectral characteristic peak in the second spectrum is greater than a fourth threshold, and determining that the object is not damaged if the difference in position is less than the third threshold and the difference in intensity is less than the fourth threshold.

In another embodiment, another setting may be made, that is, it is determined that the object is damaged if both the difference in position is greater than the third threshold and the difference in intensity is greater than the fourth threshold. It is determined that the object is not damaged either the difference in position is less than the third threshold or the difference in intensity is less than the fourth threshold. Of course, this embodiment may not be the most desired, but can be set as needed.

Any peak detection method known in the art (e.g., Gaussian fitting method) may be employed to extract the peak positions of the fluorescent envelopes of the first and second spectra as well as the Raman spectra characteristic peaks in the first and second spectra.

As an example, the third threshold may be set according to actual conditions. For example, the third threshold may be 10 or 20 (Raman shift, in cm$^{-1}$) or other suitable value. The fourth threshold may also be set according to actual conditions. In the case where the stability of the power of the exciting light source is relatively high, the fourth threshold may be set to 10%. The fourth threshold may be set in the range of 5% to 30%.

Further, the comparison between the first spectrum and the second spectrum may be achieved on basis of a similarity between the first spectrum and the second spectrum. For example, the above step S30 may include: calculating the similarity between the first spectrum and the second spectrum; and determining that the object is damaged if the similarity between the first spectrum and the second spectrum is less than a fifth threshold; otherwise, determining that the object is not damaged.

The above similarity may be calculated by various methods. For example, if A(x) represents the first spectrum and B(x) represents the second spectrum, in an example, the above similarity may be calculated by using the maximum likelihood algorithm on basis of the following equation (2):

$$Corr = \left(1 - \sqrt{1 - \frac{A(x) \bullet B(x)}{\sqrt{A(x) \bullet A(x)}\sqrt{B(x) \bullet B(x)}}}\right) \times 100\% \qquad \text{equation (2)}$$

where Corr is the similarity between the first spectrum and the second spectrum, and the operator of" • " represents dot product operation.

In another example, A(x) and B(x) may be sampled respectively to obtain their respective n sample points. These sample points are defined as $A_1$, $A_2$, ..., $A_n$ and $B_1$, $B_2$, ..., $B_n$, respectively. The similarity Corr between the first spectrum and the second spectrum may be calculated on basis of the following equation (3):

$$Corr = \frac{\left(\left(A(x) - \frac{\sum_{i=1}^{n} A_i}{n}\right) \bullet \left(B(x) - \frac{\sum_{i=1}^{n} B_i}{n}\right)\right)^2}{\left(\left(A(x) - \frac{\sum_{i=1}^{n} A_i}{n}\right) \bullet \left(A(x) - \frac{\sum_{i=1}^{n} A_i}{n}\right)\right)\left(\left(B(x) - \frac{\sum_{i=1}^{n} B_i}{n}\right) \bullet \left(B(x) - \frac{\sum_{i=1}^{n} B_i}{n}\right)\right)} \times 100\% \qquad \text{equation (3)}$$

where the operator of" • " also represents dot product operation.

In another example, A(x) and B(x) may be sampled respectively to obtain their respective n sample points. These sample points are defined as $A_1$, $A_2$, ..., $A_n$ and $B_1$, $B_2$, ..., $B_n$, respectively. The similarity Corr between the first spectrum and the second spectrum may be calculated on basis of the following equation (4):

$$Corr = \left(1 - \frac{\sum_{i=1}^{n} |A_i - B_i|}{n}\right) \times 100\% \qquad \text{equation (4)}$$

The above calculations of the similarity may be performed for whole spectrum, or may be performed for local parts with the characterizing portion in the first spectrum and the second spectrum. The above paragraphs only give some examples of calculation of the similarity. Alternatively, other calculation methods of the similarity in the art are also applicable. Determining whether or not the difference between the first spectrum and the second spectrum is within a predetermined range may be achieved by determining whether or not the similarity exceeds the fifth threshold. As an example, the fifth threshold may be such as 0.9, 0.8 or the like. The embodiments of the present invention are not limited thereto, and other values may be set for the fifth threshold according to actual needs.

In the above embodiments, it is described that it is determined whether or not the object is damaged by comparing the first spectrum with the second spectrum based on the overall integrated intensity, the fluorescent envelope peak intensity (the reference fluorescent intensity) and the Raman spectral characteristics or by calculating the similarity between the spectra. Among these methods, it is easiest to calculate the overall integrated intensity of the spectrum, it is more complex to calculate the intensity and position of the fluorescent envelope peak as well as the similarity between the spectra, and it is most complex to calculate the Raman spectral characteristics, especially when the fluorescent intensities in the first spectrum and the second spectrum are relatively high, it is necessary to remove the fluorescent interference to find the characteristic peak of the Raman spectrum. But it is most accurate to determine whether or not the object to be detected is damaged based on the Raman spectral characteristics. Therefore, in practice, the above three methods may be used in any combination, for example, firstly comparing the first spectrum with the second spectrum based on the overall integrated intensity or the fluorescent envelope peak intensity, and then comparing the first spectrum with the second spectrum based on the Raman spectral characteristics. Two examples of combining the above three methods are provided as follows.

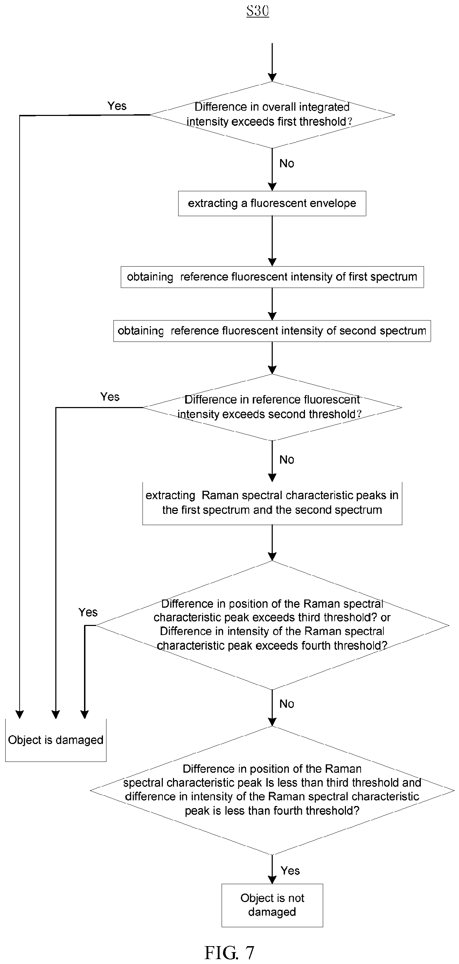

In an example, as shown in FIG. 7, the foregoing step S30 may include:

comparing the overall integrated intensity of the first spectrum with the overall integrated intensity of the second spectrum to obtain a difference between the overall integrated intensity of the first spectrum and the overall integrated intensity of the second spectrum; determining that the object is damaged if the difference between the overall integrated intensity of the first spectrum and the overall integrated intensity of the second spectrum exceeds the first threshold; otherwise, the following steps are performed:
extracting the fluorescent envelope of the first spectrum and the fluorescent envelope of the second spectrum, respectively; detecting the position and the intensity of one or more peak in the fluorescent envelope of the first spectrum to obtain one or more reference fluorescent intensity of the first spectrum;
detecting the intensity at a position in the fluorescent envelope of the second spectrum corresponding to the position of the one or more peak to obtain one or more second reference fluorescent intensity;
determining that the object is damaged if the difference between the first reference fluorescent intensity and the second reference fluorescent intensity exceeds the second threshold; otherwise, the following steps are performed:

extracting a Raman spectral characteristic peak in the first spectrum and a Raman spectral characteristic peak in the second spectrum, respectively;

comparing the position and the intensity of the Raman spectral characteristic peak in the first spectrum with the position and the intensity of the Raman spectral characteristic peak in the second spectrum, respectively; determining that the object is damaged if the difference between the position of the Raman spectral characteristic peak in the first spectrum and the position of the Raman spectral characteristic peak in the second spectrum exceeds the third threshold or if the difference between the intensity of the Raman spectral characteristic peak in the first spectrum and the intensity of the Raman spectral characteristic peak in the second spectrum exceeds the fourth threshold; and determining that the object is not damaged if the difference between the position of the Raman spectral characteristic peak in the first spectrum and the position of the Raman spectral characteristic peak in the second spectrum is less than the third threshold and the difference between the intensity of the Raman spectral characteristic peak in the first spectrum and the intensity of the Raman spectral characteristic peak in the second spectrum is less than the fourth threshold.

In the above example, the first threshold and the second threshold may be set to be relatively large, such that when the difference between the first spectrum and the second spectrum is relatively large, it may be directly determined that the object is damaged by comparing the first spectrum with the second spectrum based on the overall integrated intensity or the reference fluorescent intensity, which can improve the calculation efficiency. When the difference between the first spectrum and the second spectrum is relatively small, in order to improve the accuracy of the detection, it may be determined whether or not the object to be detected is damaged by comparing the first spectrum with the second spectrum based on the differences in the position and the intensity of the Raman spectral characteristic peak. It is also possible to decide whether or not to use a method of calculating the similarity between the spectra as needed. This can take full advantage of these methods.

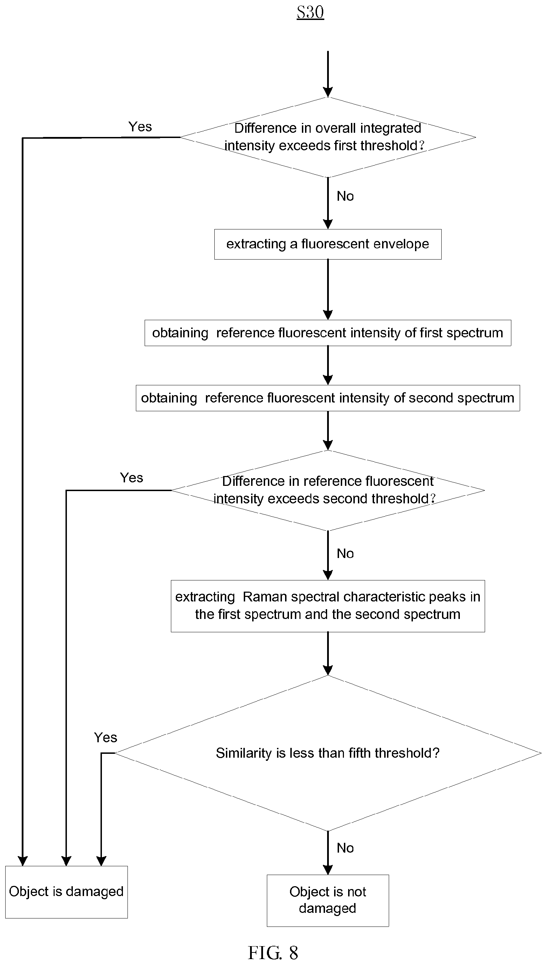

In another example, when the similarity calculation may be performed only on the partial portion including the characteristic portion in the first spectrum and the second spectrum, as shown in FIG. 8, the above step S30 may include:

comparing the overall integrated intensity of the first spectrum with the overall integrated intensity of the second spectrum to obtain the difference between the overall integrated intensity of the first spectrum and the overall integrated intensity of the second spectrum; determining that the object is damaged if the difference between the overall integrated intensity of the first spectrum and the overall integrated intensity of the second spectrum exceeds the first threshold; otherwise, the following steps are performed:

extracting the fluorescent envelope of the first spectrum and the fluorescent envelope of the second spectrum, respectively;

detecting the position and the intensity of one or more peak in the fluorescent envelope of the first spectrum to obtain one or more fluorescent envelope intensity (first reference fluorescent intensity) of the first spectrum;

detecting the intensity at a position in the fluorescent envelope of the second spectrum corresponding to the position of the one or more peak to obtain one or more second reference fluorescent intensity;

determining that the object is damaged if the difference between the first reference fluorescent intensity and the second reference fluorescent intensity exceeds the second threshold; otherwise, the following steps are performed:

calculating the similarity between the first spectrum and the second spectrum; determining that the object is damaged if the similarity between the first spectrum and the second spectrum is less than the fifth threshold; otherwise, determining that the object is not damaged.

In the example shown in FIG. 8, the above three methods are also combined, and only the method based on the similarity calculation is used to replace the method based on the position and intensity detection of the Raman spectral characteristic peak, correspondingly, the example may also take full advantage of the above three methods.

In another example, when the similarity calculation is preferably performed on the entire spectrum, the method including the similarity calculation and the comparison between the similarity and the fifth threshold may replace the method including the comparison between the difference between the first reference fluorescent intensity and the second reference fluorescent intensity and the second threshold.

In an example, the exciting light is achieved by a laser pulse, each pulse having an energy of 0.1 millijoule to 0.5 millijoule.

In an embodiment of the present invention, in order to improve the inspection effect, the first spectrum and the second spectrum may be smoothed before the first spectrum and the second spectrum are compared with each other. However, embodiments of the present invention are not limited thereto, and for example, the first spectrum and the second spectrum may not be smoothed.

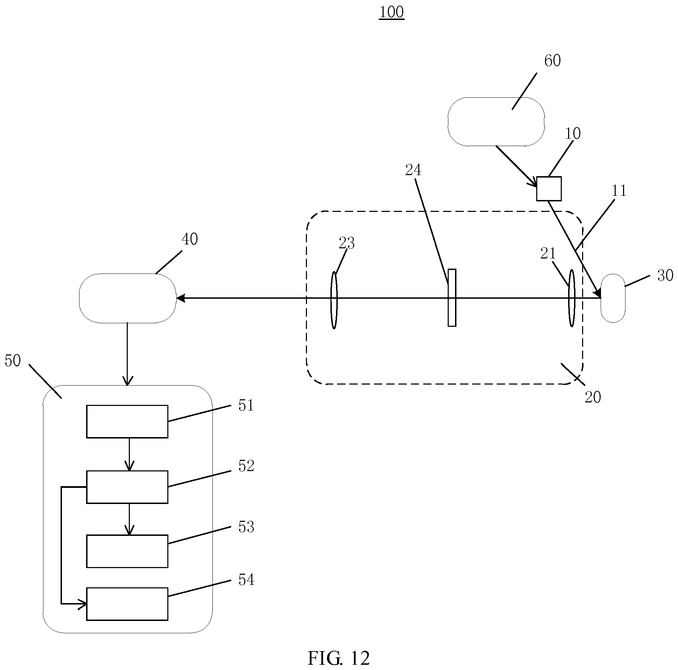

An embodiment of the present invention also discloses an apparatus 100 for inspecting security of an object to be detected. As shown in FIG. 12, the apparatus 100 for inspecting the security of the object to be detected may include a laser device 10 configured to emit exciting light 11; an optical device 20 configured to guide the exciting light 11 to the object 30 and collect a light signal from the object 30; a spectrometer 40 configured to split the collected optical signal to generate a spectrum of the object 30; and an object state determining device 50 configured to receive the spectrum from the spectrometer 40 and compare the spectra which are respectively generated based on the optical signals collected from the same object at least twice so as to determine whether or not the object is damaged.

With the above-described the apparatus 100 for inspecting security of the object to be detected, it is possible to determine whether or not the object is damaged, for example, by using the aforementioned method S100 for detecting security of the object to be detected, to reduce or eliminate the risk due to the reaction of the object with the exciting light.

In an embodiment, the object state determining device 50 may include at least one of a first module 51, a second module 52, a third module 53 and a fourth module 54. The first module 51 is configured to compare the overall intensities of the spectra which are respectively generated from the optical signals collected from the same object at least twice. The second module 52 is configured to compare the fluorescent envelopes of the spectra which are respectively generated from the optical signals collected from the same object at least twice. The third module 53 is configured to compare the Raman spectral characteristics of the spectra which are respectively generated from the optical signals collected from the same object at least twice. The fourth module 54 is configured to calculate the similarity between the spectrum signals which are collected from the same object at least twice. The first module 51, the second module 52, the third module 53 and the fourth module 54 are respectively used to perform the above methods in which it is determined whether or not the object is damaged by comparing the first spectrum with the second spectrum based on the overall integrated intensity, the reference fluorescent intensity, the Raman spectral characteristic and the similarity of the spectrum signals. The first module 51, the second module 52, the third module 53 and the fourth module 54 may be used independently or in combination. For example, the first module 51 can provide a start signal for the second module 52 to make the second module 52 operate in a case where the first module 51 cannot determine whether or not the object is damaged, and the second module 52 can provide a start signal for the third module 53 or the fourth module 54 to make the third module 53 or the fourth module 54 operate in a case where the second module 52 cannot determine whether or not the object is damaged, so as to finally determine whether or not the object is damaged.

In an embodiment, the apparatus 100 for inspecting security of the object to be detected may further include an exciting light modulation module 60. The exciting light modulation module 60 may modulate the exciting light into at least two sets of laser pulses having a time interval greater than or equal to 500 milliseconds. As mentioned above, it is necessary to collect the optical signals for the object at least twice for purpose of inspecting security of the object. There may be a time interval, for example, more than 500 milliseconds, between two adjacent collections. The exciting light modulation module 60 can directly control the exciting light to achieve at least two collections as required for the modulation manner of the exciting light, without adjusting the optical device and the object, thereby improving the inspection efficiency.

In an embodiment of the present invention, it is ensured that the object is not ignited after two pulsed irradiations by controlling the laser power and the light emitting time. If the difference between two signals exceeds the threshold, the detection will be stopped and it is warned that the substance is easily damaged by the laser.

As an example, as shown in FIG. 12, the optical device 20 may include a first lens 21 configured to collect an optical signal from the object 30; a second lens 23 configured to converge the collected optical signal to the spectrometer 40; and a filter 24 located between the first lens 21 and the second lens 23 and configured to filter the optical signal collected by the first lens 21.

However, embodiments of the present invention are not limited thereto, for example, optical devices employed in the Raman spectroscopy inspecting apparatus in the related art can be used as the optical device of the apparatus 100 for inspecting security of the object to be detected.

The comparison of the first spectrum and the second spectrum may be performed, for example, by a computer or a processor.

FIG. 9a and FIG. 9b show a first spectrum (original sample) and a second spectrum (sample after being irradiated with exciting light) of a sample to be detected partially ablated by exciting light. As can be seen from FIGs 9a and 9b, the difference between the first spectrum and the second spectrum is very significant. By comparing the first spectrum with the second spectrum, it can be determined that a composition of the sample has been changed, that is, the sample is damaged.

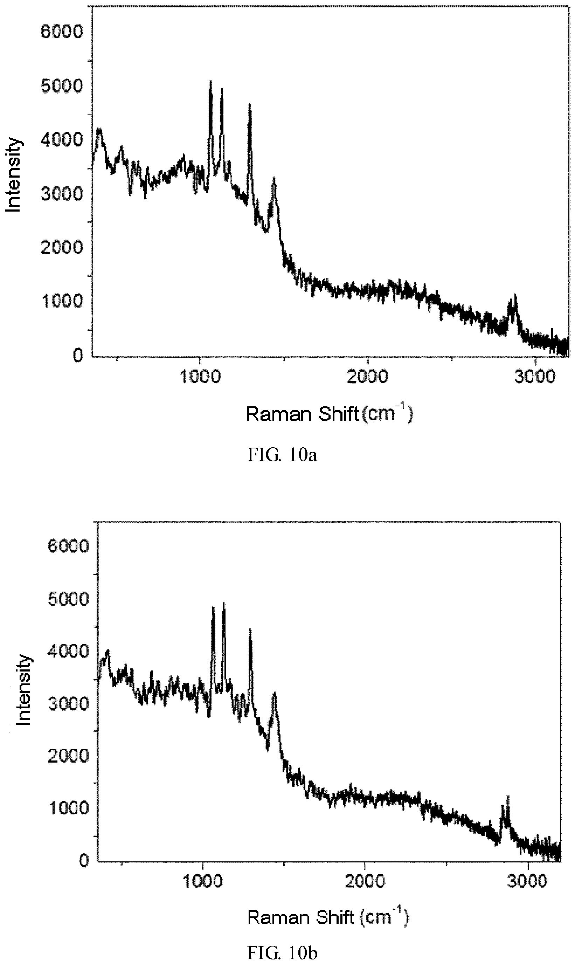

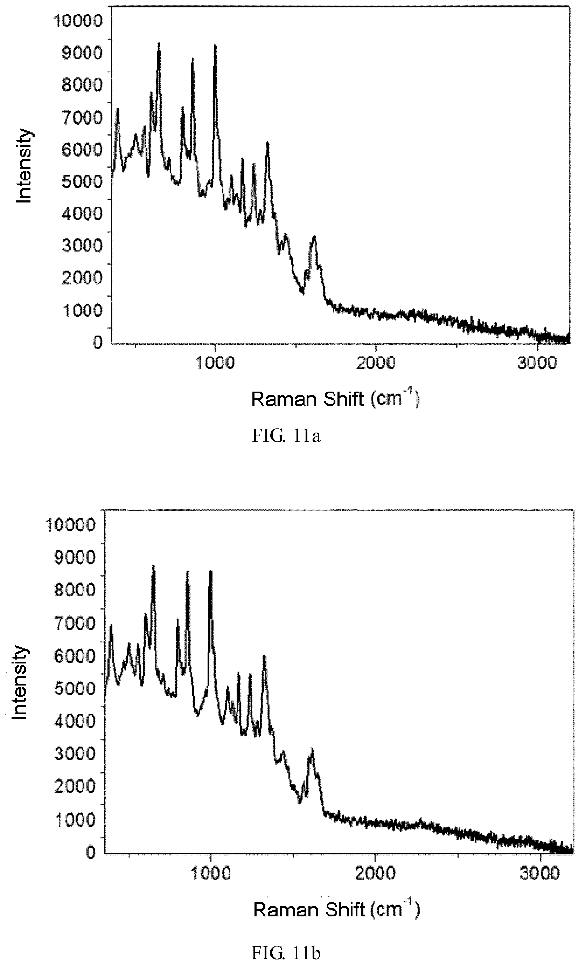

FIG. 10a and FIG. 10b show the first spectrum and the second spectrum obtained by inspecting transparent plastic twice. FIG. 11a and FIG. 11b show the first spectrum and the second spectrum obtained by inspecting a common cold medicine twice. As can be seen from FIG. 10a, FIG. 10b, FIG. 11a and FIG. 11b, there is no substantial difference between the first spectrum and the second spectrum of each of the transparent plastic and the common cold medicine, and their compositions are not changed before and after they are irradiated with the exciting light.

The above description has explained various embodiments of the above method and apparatus for inspecting security of the object to be detected by schematic views, flow charts and/or examples. In case that the schematic views, flow charts and/or examples each include one or more functions and/or operations, the skilled person in the art should understand that each function and/or operation in such schematic views, flow charts and/or examples may be implemented separately and/or collectively by various structures, hardware, software, firmware or any combination of them in essential. In an embodiment, some parts of the subject of the embodiments of the present disclosure may be implemented by Application Specific Integrated Circuits (ASIC), Field Programmable Gate Arrays (FPGA), Digital Signal Processors (DSP) or other integrated forms. However, the skilled person in the art should understand that some aspects of the embodiments disclosed herein may be implemented equally in the integrated circuit entirely or partly, implemented as one or more computer programs running on one or more computers (for example, implemented as one or more programs running on one or more computer systems), implemented as one or more programs running on one or more processors (for example, implemented as one or more programs running on one or more microprocessors), implemented as firmware, or implemented as any combination of the above methods in essential. From the present disclosure, the skilled person in the art has capability of designing circuits and/or writing software and/or firmware codes. Furthermore, the skilled person in the art will appreciate that the mechanism of the subject of the present disclosure may be delivered as various forms of program products, and the exemplified embodiments of the subject of the present disclosure may be applicable independent of the specific types of the signal carrying media that perform the delivery in practice. Examples of the signal carrying media include, but not limited to: recordable media, such as a floppy disc, a hard disk drive, an optical disc (CD, DVD), a digital magnetic tape, a computer memory or the like; and transmission media such as digital and/or analogue communication media (for example, an optical fiber cable, a wave guide, a wired communication link, a wireless communication link or the like).

All of the above embodiments of the present disclosure may be combined freely to form other embodiments unless there are technical obstacles or contradictions. All of these other embodiments fall within the protection range of the present disclosure.

Although the present disclosure has been explained with reference to the drawings, the embodiments shown in the drawings are only illustrative, instead of limiting the present disclosure. Scales in the drawings are only illustrative, instead of limiting the present disclosure.

Although some embodiments of the general inventive concept are illustrated and explained, it would be appreciated by those skilled in the art that modifications and variations may be made in these embodiments without departing from the principles and spirit of the general inventive concept of the present disclosure, the scope of which is defined in the appended claims and their equivalents.

## Claims

1. A method for inspecting security of an object to be detected, comprising:

   guiding an exciting light to the object, collecting a first optical signal from the object and generating a first spectrum from the first optical signal;
   guiding the exciting light to the object again after a predetermined time interval, collecting a second optical signal from the object and generating a second spectrum from the second optical signal; and
   comparing the first spectrum with the second spectrum to determine whether or not the object is damaged.

2. The method according to claim 1, wherein the comparing the first spectrum with the second spectrum to determine whether or not the object is damaged comprises:
   comparing an overall integrated intensity of the first spectrum with an overall integrated intensity of the second spectrum to obtain a difference between the overall integrated intensity of the first spectrum and the overall integrated intensity of the second spectrum; determining that the object is damaged in response to a condition where the difference between the overall integrated intensity of the first spectrum and the overall integrated intensity of the second spectrum exceeds a first threshold, and determining that the object is not damaged in response to a condition where the difference between the overall integrated intensity of the first spectrum and the overall integrated intensity of the second spectrum does not exceed the first threshold.

3. The method according to claim 1, wherein the comparing the first spectrum with the second spectrum to determine whether or not the object is damaged comprises:

   extracting a fluorescent envelope of the first spectrum and a fluorescent envelope of the second spectrum, respectively; and
   comparing the fluorescent envelope of the first spectrum with the fluorescent envelope of the second spectrum to determine whether or not the object is damaged.

4. The method according to claim 3, wherein the comparing the fluorescent envelope of the first spectrum with the fluorescent envelope of the second spectrum to determine whether or not the object is damaged comprises:

   detecting a position and an intensity of one or more peak in the fluorescent envelope of the first spectrum to obtain one or more first reference fluorescent intensity;
   detecting an intensity at a position in the fluorescent envelope of the second spectrum corresponding to the position of the one or more peak to obtain one or more second reference fluorescent intensity;
   determining that the object is damaged in response to a condition where a difference between the first reference fluorescent intensity and the second reference fluorescent intensity exceeds a second threshold, and determining that the object is not damaged in response to a condition where the difference between the first reference fluorescent intensity and the second reference fluorescent intensity does not exceed the second threshold.

5. The method according to any one of claims 1 to 4, wherein the comparing the first spectrum with the second spectrum to determine whether or not the object is damaged comprises:

   extracting a Raman spectral characteristic peak in the first spectrum and a Raman spectral characteristic peak in the second spectrum, respectively;
   comparing a position of the Raman spectral characteristic peak in the first spectrum with a position of the Raman spectral characteristic peak in the second spectrum, and determining that the object is damaged in response to a condition where a difference between the position of the Raman spectral characteristic peak in the first spectrum and the position of the Raman spectral characteristic peak in the second spectrum exceeds a third threshold.

6. The method according to any one of claims 1 to 4, wherein the comparing the first spectrum with the second spectrum to determine whether or not the object is damaged comprises:

   extracting a Raman spectral characteristic peak in the first spectrum and a Raman spectral characteristic peak in the second spectrum, respectively;
   comparing an intensity of the Raman spectral characteristic peak in the first spectrum with an intensity of the Raman spectral characteristic peak in the second spectrum, and determining that the object is damaged in response to a condition where a difference between the intensity of the Raman spectral characteristic peak in the first spectrum and the intensity of the Raman spectral characteristic peak in the second spectrum exceeds a fourth threshold.

7. The method according to any one of claims 1 to 4, wherein the comparing the first spectrum with the second spectrum to determine whether or not the object is damaged comprises:
   calculating a similarity between the first spectrum and the second spectrum, and determining that the object is damaged in response to a condition where the similarity between the first spectrum and the second spectrum is less than a fifth threshold, and determining that the object is not damaged in response to a condition where the similarity between the first spectrum and the second spectrum is not less than the fifth threshold.

8. The method according to claim 1, wherein the comparing the first spectrum with the second spectrum to determine whether or not the object is damaged comprises: comparing an overall integrated intensity of the first spectrum with an overall integrated intensity of the second spectrum to obtain a difference between the overall integrated intensity of the first spectrum and the overall integrated intensity of the second spectrum; determining that the object is damaged in response to a condition where the difference between the overall integrated intensity of the first spectrum and the overall integrated intensity of the second spectrum exceeds a first threshold, and performing the following steps in response to a condition where the difference in overall integrated intensity does not exceed the first threshold:

   extracting a fluorescent envelope of the first spectrum and a fluorescent envelope of the second spectrum, respectively;
   detecting a position and an intensity of one or more peak in the fluorescent envelope of the first spectrum to obtain one or more first reference fluorescent intensity;
   detecting an intensity at a position in the fluorescent envelope of the second spectrum corresponding to the position of the one or more peak to obtain one or more second reference fluorescent intensity;
   determining that the object is damaged in response to a condition where a difference between the first reference fluorescent intensity and the second reference fluorescent intensity exceeds a second threshold, and performing the following steps in response to a condition where the difference between the first reference fluorescent intensity and the second reference fluorescent intensity does not exceed the second threshold:

extracting a Raman spectral characteristic peak in the first spectrum and a Raman spectral characteristic peak in the second spectrum, respectively;

comparing a position of the Raman spectral characteristic peak in the first spectrum with a position of the Raman spectral characteristic peak in the second spectrum, and determining that the object is damaged in response to a condition where a difference between the position of the Raman spectral characteristic peak in the first spectrum and the position of the Raman spectral characteristic peak in the second spectrum is greater than a third threshold.

9. The method according to claim 1, wherein the comparing the first spectrum with the second spectrum to determine whether or not the object is damaged comprises: comparing an overall integrated intensity of the first spectrum with an overall integrated intensity of the second spectrum to obtain a difference between the overall integrated intensity of the first spectrum and the overall integrated intensity of the second spectrum; determining that the object is damaged in response to a condition where the difference between the overall integrated intensity of the first spectrum and the overall integrated intensity of the second spectrum exceeds a first threshold, and performing the following steps in response to a condition where the difference between the overall integrated intensity of the first spectrum and the overall integrated intensity of the second spectrum does not exceed the first threshold:

extracting a fluorescent envelope of the first spectrum and a fluorescent envelope of the second spectrum, respectively;

detecting a position and an intensity of one or more peak in the fluorescent envelope of the first spectrum to obtain one or more first reference fluorescent intensity;

detecting an intensity at a position in the fluorescent envelope of the second spectrum corresponding to the position of the one or more peak to obtain one or more second reference fluorescent intensity;

determining that the object is damaged in response to a condition where a difference between the first reference fluorescent intensity and the second reference fluorescent intensity exceeds a second threshold, and performing the following steps in response to a condition where the difference between the first reference fluorescent intensity and the second reference fluorescent intensity does not exceed the second threshold:

extracting a Raman spectral characteristic peak in the first spectrum and a Raman spectral characteristic peak in the second spectrum, respectively;

comparing an intensity of the Raman spectral characteristic peak in the first spectrum with an intensity of the Raman spectral characteristic peak in the second spectrum, and determining that the object is damaged in response to a condition where a difference between the intensity of the Raman spectral characteristic peak in the first spectrum and the intensity of the Raman spectral characteristic peak in the second spectrum is greater than a fourth threshold.

10. The method according to claim 1, wherein the comparing the first spectrum with the second spectrum to determine whether or not the object is damaged comprises: comparing an overall integrated intensity of the first spectrum with an overall integrated intensity of the second spectrum to obtain a difference between the overall integrated intensity of the first spectrum and the overall integrated intensity of the second spectrum; determining that the object is damaged in response to a condition where the difference between the overall integrated intensity of the first spectrum and the overall integrated intensity of the second spectrum exceeds a first threshold, and performing the following steps in response to a condition where the difference between the overall integrated intensity of the first spectrum and the overall integrated intensity of the second spectrum does not exceed the first threshold:

extracting a fluorescent envelope of the first spectrum and a fluorescent envelope of the second spectrum, respectively;

detecting a position and an intensity of one or more peak in the fluorescent envelope of the first spectrum to obtain one or more first reference fluorescent intensity;

detecting an intensity at a position in the fluorescent envelope of the second spectrum corresponding to the position of the one or more peak to obtain one or more second reference fluorescent intensity;

determining that the object is damaged in response to a condition where a difference between the first reference fluorescent intensity and the second reference fluorescent intensity exceeds a second threshold, and performing the following steps in response to a condition where the difference between the first reference fluorescent intensity and the second reference fluorescent intensity does not exceed the second threshold:

calculating a similarity between the first spectrum and the second spectrum, and determining that the object is damaged in response to a condition where the similarity between the first spectrum and the second spectrum is less than a fifth threshold, and determining that the object is not damaged in response to a condition where the similarity between the first spectrum and the second spectrum is not less than the fifth threshold.

11. The method according to claim 1, wherein the exciting light is achieved by at least one set of laser pulses, and the exciting light has an energy ranging between 0.1 millijoule and 0.5 millijoule.

12. The method according to claim 1, wherein the predetermined time interval is greater than or equal to 500 milliseconds.

13. The method according to claim 1, wherein the exciting light configured to generate the first optical signal and the exciting light configured to generate the second optical signal are equal in power.

14. An apparatus for inspecting security of an object to be detected, comprising:

a laser device configured to emit an exciting light;
an optical device configured to guide the exciting light to the object and collect an optical signal from the object;
a spectrometer configured to split the optical signal from the optical device to generate a spectrum of the object; and
an object state determining device configured to receive the spectrum from the spectrometer and compare the spectra which are respectively generated from the optical signals collected from the same object at least twice so as to determine whether or not the object is damaged.

15. The apparatus according to claim 14, wherein the object state determining device comprises a first module configured to compare overall intensities of the spectra which are respectively generated from the optical signals collected from the same object at least twice.

16. The apparatus according to claim 14, wherein the object state determining device comprises a second module configured to compare fluorescent envelopes of the spectra which are respectively generated from the optical signals collected from the same object at least twice.

17. The apparatus according to any one of claims 14 to 16, wherein the object state determining device comprises a third module configured to compare Raman spectral characteristics of the spectra which are respectively generated from the optical signals collected from the same object at least twice.

18. The apparatus according to any one of claims 14 to 16, wherein the object state determining device comprises a fourth module configured to calculate a similarity of spectrum signals which are respectively collected from the same object at least twice.

19. The apparatus according to claim 14, further comprising: an exciting light modulation module configured to modulate the exciting light into at least two sets of laser pulses having a time interval greater than or equal to 500 milliseconds.

S100

S10

S20

S30

FIG. 1

S30

Difference in overall integrated intensity exceeds first threshold?

No

Yes

Object is not damaged

Object is damaged

FIG. 2

S30

S31

S32

FIG. 3

S32

S321

S322

No — Difference in reference fluorescent intensity exceeds second threshold?

Yes

Object is not damaged

Object is damaged

S323

FIG. 4

S30

S31'

S32'

Difference in Position of the Raman
spectral characteristic peak exceeds third
threshold? or Difference in intensity of the
Raman spectral characteristic peak
exceeds fourth threshold?

No

Yes

S33'

Difference in Position of the Raman
spectral characteristic peak is less than
third threshold? or Difference in intensity
of the Raman spectral characteristic peak
is less than fourth threshold?

Yes

Object is
damaged

Object is not
damaged

FIG. 5

S30

Similarity between first
spectrum and second
spectrum < fifth threshold?

No

Yes

Object is not
damaged

Object is
damaged

FIG. 6

S30

```
                              ┌──────────────────────────┐
              Yes             │  Difference in overall    │
        ◄──────────────────── │  integrated intensity     │
        │                     │  exceeds first threshold? │
        │                     └──────────────────────────┘
        │                            │ No
        │                            ▼
        │              ┌──────────────────────────────┐
        │              │ extracting a fluorescent      │
        │              │ envelope                      │
        │              └──────────────────────────────┘
        │                            │
        │                            ▼
        │     ┌──────────────────────────────────────────────┐
        │     │ obtaining reference fluorescent intensity      │
        │     │ of first spectrum                              │
        │     └──────────────────────────────────────────────┘
        │                            │
        │                            ▼
        │  ┌──────────────────────────────────────────────────┐
        │  │ obtaining reference fluorescent intensity of       │
        │  │ second spectrum                                    │
        │  └──────────────────────────────────────────────────┘
```

Difference in overall integrated intensity exceeds first threshold?   Yes / No

extracting a fluorescent envelope

obtaining reference fluorescent intensity of first spectrum

obtaining reference fluorescent intensity of second spectrum

Difference in reference fluorescent intensity exceeds second threshold?   Yes / No

extracting Raman spectral characteristic peaks in the first spectrum and the second spectrum

Difference in position of the Raman spectral characteristic peak exceeds third threshold? or Difference in intensity of the Raman spectral characteristic peak exceeds fourth threshold?   Yes / No

Object is damaged

Difference in position of the Raman spectral characteristic peak Is less than third threshold and difference in intensity of the Raman spectral characteristic peak is less than fourth threshold?   Yes

Object is not damaged

FIG. 7

S30

```
                              ┌─────────────────────────┐
                    Yes ◄─────│ Difference in overall   │
                              │ integrated intensity    │
                              │ exceeds first threshold?│
                              └────────────┬────────────┘
                                           │ No
                              ┌────────────▼────────────┐
                              │ extracting a fluorescent│
                              │ envelope                │
                              └────────────┬────────────┘
                              ┌────────────▼────────────┐
                              │ obtaining reference     │
                              │ fluorescent intensity of│
                              │ first spectrum          │
                              └────────────┬────────────┘
                              ┌────────────▼────────────┐
                              │ obtaining reference     │
                              │ fluorescent intensity of│
                              │ second spectrum         │
                              └────────────┬────────────┘
                              ┌────────────▼────────────┐
                    Yes ◄─────│ Difference in reference │
                              │ fluorescent intensity   │
                              │ exceeds second threshold?│
                              └────────────┬────────────┘
                                           │ No
                              ┌────────────▼────────────┐
                              │ extracting Raman        │
                              │ spectral characteristic │
                              │ peaks in the first      │
                              │ spectrum and the second │
                              │ spectrum                │
                              └────────────┬────────────┘
                              ┌────────────▼────────────┐
                    Yes ◄─────│ Similarity is less than │
                              │ fifth threshold?        │
                              └────────────┬────────────┘
                                           │ No
   ┌──────────────┐          ┌─────────────▼───────────┐
   │ Object is    │          │ Object is not damaged   │
   │ damaged      │          └─────────────────────────┘
   └──────────────┘
```

FIG. 8

FIG. 9a

FIG. 9b

FIG. 10a

FIG. 10b

FIG. 11a

FIG. 11b

100

60

10

24

11

23

40

21

30

50

20

51

52

53

54

FIG. 12

<div align="center">**INTERNATIONAL SEARCH REPORT**</div>

| International application No. |
|---|
| **PCT/CN2018/122839** |

**A. CLASSIFICATION OF SUBJECT MATTER**

G01N 21/65(2006.01)i

According to International Patent Classification (IPC) or to both national classification and IPC

**B. FIELDS SEARCHED**

Minimum documentation searched (classification system followed by classification symbols)

G01N

Documentation searched other than minimum documentation to the extent that such documents are included in the fields searched

Electronic data base consulted during the international search (name of data base and, where practicable, search terms used)

CNPAT, CNKI, WPI, EPODOC: 同方威视, 张建红, 王红球, 左佳倩, 刘海辉, 损坏, 破坏, 受损, 损伤, 光谱, 荧光, 拉曼, 强度, 特征峰, 比较, 差异, 第一, 第二, 时间, 间隔, 激发光, 激光, 烧蚀, 薄膜, 元件, raman, fluorescence, spectrum, first, second, compare, determine, damage, laser, difference, intension

**C. DOCUMENTS CONSIDERED TO BE RELEVANT**

| Category* | Citation of document, with indication, where appropriate, of the relevant passages | Relevant to claim No. |
|---|---|---|
| PX | CN 107991285 A (NUCTECH COMPANY LIMITED) 04 May 2018 (2018-05-04) claims 1-19 | 1-19 |
| PX | CN 207779901 U (NUCTECH COMPANY LIMITED) 28 August 2018 (2018-08-28) description, paragraphs [0029]-[0103] | 1-19 |
| X | CN 106404745 A (CHANGCHUN INSTITUTE OF OPTICS, FINE MECHANICS AND PHYSICS, CHINESE ACADEMY OF SCIENCES) 15 February 2017 (2017-02-15) description, paragraphs [0022]-[0066] | 1-19 |
| X | CN 102680447 A (SHANGHAI INSTITUTE OF OPTICS AND FINE MECHANICS, CHINESE ACADEMY OF SCIENCES) 19 September 2012 (2012-09-19) description, paragraphs [0016]-[0025] | 1-4, 14-16 |
| X | CN 106066318 A (CHANGCHUN INSTITUTE OF OPTICS, FINE MECHANICS AND PHYSICS, CHINESE ACADEMY OF SCIENCES) 02 November 2016 (2016-11-02) description, paragraphs [0023]-[0052] | 1-4, 14-16 |
| A | CN 102226764 A (XI'AN TECHNOLOGICAL UNIVERSITY) 26 October 2011 (2011-10-26) entire document | 1-19 |

☑ Further documents are listed in the continuation of Box C.     ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 February 2019** | **22 March 2019** |

| Name and mailing address of the ISA/CN | Authorized officer |
|---|---|
| **National Intellectual Property Administration, PRC**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2018/122839** |

**C.      DOCUMENTS CONSIDERED TO BE RELEVANT**

| Category* | Citation of document, with indication, where appropriate, of the relevant passages | Relevant to claim No. |
| --- | --- | --- |
| A | CN 102866163 A (SHANGHAI INSTITUTE OF OPTICS AND FINE MECHANICS, CHINESE ACADEMY OF SCIENCES) 09 January 2013 (2013-01-09) entire document | 1-19 |
| A | CN 106370629 A (THE XINJIANG TECHNICAL INSTITUTE OF PHYSICS & CHEMISTRY, CAS) 01 February 2017 (2017-02-01) entire document | 1-19 |
| A | US 2005237523 A1 (MUEHLIG, C. ET AL.) 27 October 2005 (2005-10-27) entire document | 1-19 |

Form PCT/ISA/210 (second sheet) (January 2015)

**INTERNATIONAL SEARCH REPORT**
Information on patent family members

International application No.

**PCT/CN2018/122839**

| Patent document cited in search report | | | Publication date (day/month/year) | Patent family member(s) | | | Publication date (day/month/year) |
|---|---|---|---|---|---|---|---|
| CN | 107991285 | A | 04 May 2018 | None | | | |
| CN | 207779901 | U | 28 August 2018 | None | | | |
| CN | 106404745 | A | 15 February 2017 | None | | | |
| CN | 102680447 | A | 19 September 2012 | None | | | |
| CN | 106066318 | A | 02 November 2016 | None | | | |
| CN | 102226764 | A | 26 October 2011 | None | | | |
| CN | 102866163 | A | 09 January 2013 | None | | | |
| CN | 106370629 | A | 01 February 2017 | None | | | |
| US | 2005237523 | A1 | 27 October 2005 | US | 7256887 | B2 | 14 August 2007 |
| | | | | EP | 1552281 | B1 | 31 August 2016 |
| | | | | WO | 2004027395 | A2 | 01 April 2004 |
| | | | | AU | 2003275912 | A1 | 08 April 2004 |
| | | | | JP | 2005539245 | A | 22 December 2005 |
| | | | | EP | 1552281 | A2 | 13 July 2005 |

Form PCT/ISA/210 (patent family annex) (January 2015)

**REFERENCES CITED IN THE DESCRIPTION**

**Patent documents cited in the description**

- CN 201711442583